# EUROPEAN PATENT APPLICATION

(11) **EP 4 756 493 A1**
(43) Date of publication of application: **10.06.2026**
(21) Application number: 25000115.3
(22) Date of filing: 08.12.2025
(51) Int. Cl.: G01S 17/04, F16P 3/14, G01S 17/42, G05B 19/4061, B25J 19/02

(54) **USE OF ENCODERS FOR ZONE SET SWITCHING OF A SAFETY LASER SCANNER BASED ON LINEAR MEASURING DETECTION**

(30) Priority: 06.12.2024 US 202418971957
(71) Applicant: Datalogic IP Tech S.r.l., 40012 Lippo di Calderara di Reno (BO) (IT)
(72) Inventor: Lorenzoni, Enrico, 40012 Lippo di Calderara di Reno (IT)
(74) Representative: Schohe, Stefan

(57) **Abstract**

A safety laser scanner has automatic zone set switching based on its displacement from a reference position. A safety module of the safety laser scanner determines the displacement based on a first signal received from an encoder where the first signal is indicative of movement of the safety laser scanner. The safety module receives a second input when the safety laser scanner is at a reference position and that indicates zero displacement. The safety module selects one of a plurality of zone sets based on the displacement, where each zone set defines a safety zone corresponding to displacement of the safety laser scanner from the reference position. The safety laser scanner generates an output when an object is detected in the safety zone of the selected zone set. The safety laser scanner is positionable on a platform of a machine that moves relative to a stationary portion of the machine.

## Description

### FIELD

The present application is directed to laser scanners and systems employing laser scanners, and in particular safety laser scanners.

### BACKGROUND

A safety laser scanner (SLS) is an electro-sensitive protective equipment (ESPE) that employs active opto-electronic protective devices responsive to the diffuse reflection of a radiation (AOPDDRs), according to the definition and requirements of international safety standard IEC 61496-3. The optical radiation is a Class 1 infrared laser generated within the device. The SLS uses a scanning laser to detect an object (e.g., a person) within a safety area. When the SLS detects an object in the safety area it generates an output signal that may be used to shut-down a machine. A size of the safety area is definable and for instance may be automatically controlled by speed of a vehicle on which the SLS is mounted.

The SLS is applied to a machine that presents a risk of personal injury. The SLS provides protection by making the machine revert into a safe condition before a person reaches the hazardous points. The safety area is an area that must be crossed to reach a hazard point of the machine. The safety area is scanned by the laser and detection of a person within the safety area generates an output that may be used to stop the machine before anyone reaches the hazard point. The safety area is defined using a Graphic User Interface according to application needs. The laser beam is emitted in short interval pulses that are reflected by objects in the safety area. The SLS calculates the distance from the objects by measuring the time interval between the transmission of the pulse and its reception after being reflected (time-of-flight principle).

The safety area is scanned by a mirror rotating at a constant speed that deflects the laser beam pulses over 275° around the SLS. In this way, all opaque objects that have a certain dimension are detected in the safety area. Within the sensing range of the device, two areas can be monitored simultaneously: one is the Safety Zone, which is used to detect operators or objects entering a hazardous area; the other is the Warning Zone, which can be defined with a longer distance than a Safety Zone, allowing a configuration to detect objects that are closely approaching the Safety Zone.

### SUMMARY

One aspect of the present embodiments includes the realization that a machine protected by a safety laser scanner (SLS) mounted to a moving part of the machine may be unnecessarily shut down when a safety area of the SLS moves outside a minimum safety perimeter of the machine. That is, the safety area defined for the minimum safety perimeter of the machine when the moving part is at a first position may extend beyond the minimum safety perimeter when the moving part is at a different position. The present embodiments solve this problem by automatically selecting the safety area based on the position of the moving part. For example, the SLS determines its position (e.g., a position of the moving part) based on a signal indicative of movement of the moving part and automatically selects one of a plurality of zone sets defining the safety area based on the position. Advantageously, the zone sets may be defined such that the safety area corresponds to the minimum safety perimeter of the machine for any position of the moving part.

In certain embodiments, the techniques described herein relate to a safety laser scanner with automatic zone set switching based on displacement of the safety laser scanner from a reference position, including: a laser scanner; a communication interface having a first input and an output; and a safety module including: a processor; and a memory communicatively coupled with the processor and which stores machine-executable instructions that, when executed by the processor, cause the processor to: receive, via the first input, a signal indicative of relative movement of the safety laser scanner; determine a displacement of the safety laser scanner from the reference position based on the signal; and select one of a plurality of zone sets based on the displacement for use by the laser scanner, each of the zone sets defines a respective safety zone of the laser scanner.

In certain embodiments, the techniques described herein relate to a method for zone set switching of a safety laser scanner based on linear measuring detection, including: receiving, within a communication interface of the safety laser scanner, a signal indicative of movement of the safety laser; determining a displacement of the safety laser scanner from a reference position based on the signal; and selecting one of a plurality of zone sets based on the displacement, where each zone set defines a respective safety zone of laser scanner of the safety laser scanner.

### BRIEF DESCRIPTION OF THE FIGURES

In the drawings, identical reference numbers identify similar elements or acts. The sizes and relative positions of elements in the drawings are not necessarily drawn to scale. For example, the shapes of various elements and angles are not drawn to scale, and some of these elements are arbitrarily enlarged and positioned to improve drawing legibility. Further, the particular shapes of the elements as drawn, are not intended to convey any information regarding the actual shape of the particular elements, and have been solely selected for ease of recognition in the drawings.
FIGs. 1A and 1B are schematics illustrating use of encoders for zone set switching of an safety laser scanner (SLS) based on linear measuring detection, in embodiments.
FIG. 2A shows example operation of the SLS of FIGs. 1A and 1B with the platform positioned at a reference position of the machine, in embodiments.
FIG. 2B shows example operation of the SLS of FIGs. 1A and 1B with the platform displaced from the reference position, in embodiments.
FIG. 3 is a schematic illustrating the SLS of FIGs. 1A and 1B with an enclosure, a laser scanner device, two safety modules, and a communication interface, in embodiments.
FIG. 4 is a block diagram illustrating the safety module of FIG. 3 in further example detail, in embodiments.
FIG. 5 is a schematic diagram illustrating three example safety zones defined relative to the laser scanner device and different displacements of the platform from the reference position, in embodiments.
FIG. 6A is a graph illustrating one example encoder signal that includes both A and B components generated by the encoder of FIGs. 2A and 2B, in embodiments.
FIG. 6B is a graph illustrating example timing of switching of the safety zone of the SLS of FIGs. 1A and 1B between zone sets based on encoder signals and reference signals as the platform moves away from the reference position, in embodiments.
FIG. 7 is a flowchart illustrating one example method for using encoders for zone set switching of a safety laser scanner based on linear measuring detection, in embodiments.

### DETAILED DESCRIPTION OF THE EMBODIMENTS

In the following description, certain specific details are set forth in order to provide a thorough understanding of various disclosed embodiments. However, one skilled in the relevant art will recognize that embodiments may be practiced without one or more of these specific details, or with other methods, components, materials, etc. In other instances, well-known structures associated with scanners, safety laser scanners, computers, processors (hardware processors) memory or other storage have not been shown or described in detail to avoid unnecessarily obscuring descriptions of the various implementations and embodiments.

Unless the context requires otherwise, throughout the specification and claims which follow, the word "comprise" and variations thereof, such as, "comprises" and "comprising" are to be construed in an open, inclusive sense that is as "including, but not limited to."

Reference throughout this specification to "one implementation" or "an implementation" or "one embodiment" or "an embodiment" means that a particular feature, structure or characteristic described in connection with the embodiment is included in at least one implementation or embodiment. Thus, the appearances of the phrases "one implementation" or "an implementation" or "in one embodiment" or "in an embodiment" in various places throughout this specification are not necessarily all referring to the same implementation or embodiment. Furthermore, the particular features, structures, or characteristics may be combined in any suitable manner in one or more implementations or one or more embodiments.

As used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

A safety laser scanner (SLS) is mounted to a machine to provide safety protection and generates an output (e.g., output signal switching device - OSSD) to stop operation of the machine when an object (e.g., a person) is detected by a scanning laser beam within a safety area. The SLS may have a plurality of zone sets, where each zone set defines at least one safety zone and an optional warning zone. The following examples use the safety zone, however the warning zone may also be defined to generate a warning output prior to intrusion of a person or object into the safety zone.

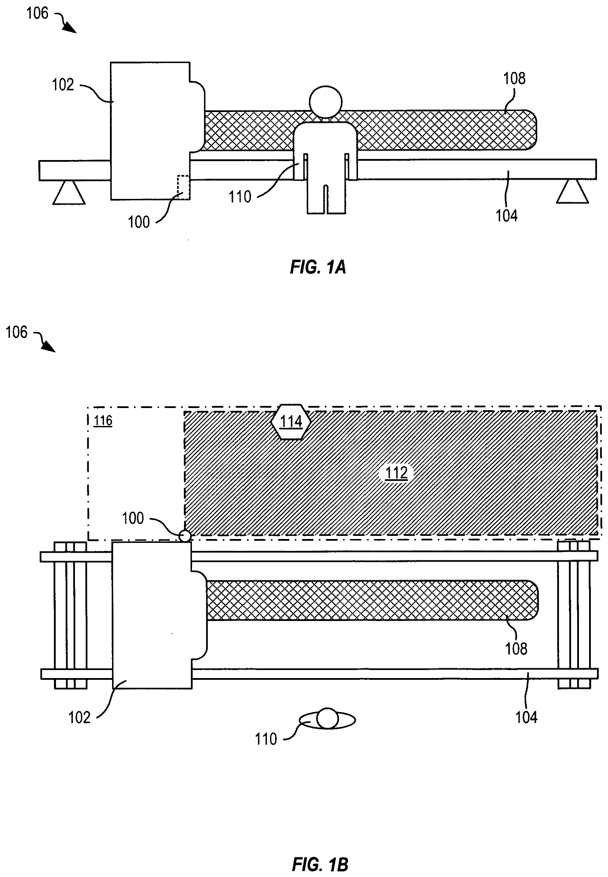

FIGs. 1A and 1B are schematics illustrating use of encoders for zone set switching of an SLS 100 based on linear measuring detection, in embodiments. SLS 100 is mounted on a platform 102 that is movable relative to a stationary portion 104 of a machine 106, in embodiments. Platform 102 may include equipment and/or tools that presents a hazard to a person, where the equipment and/or tools process a workpiece 108 (e.g., a wood/plastic/metal material) by implementing, for example, one or more of sizing, plaining, joining, sanding, brushing, molding, edge-banding, routing, drilling, and so on. Platform 102 moves along stationary portion 104 (e.g., rails, a bed, and/or a floor) to process workpiece 108.

Machine 106 may be controlled and/or monitored by an operator 110 at a front area 206 and a rear area 208 has a minimum safety area 116 outside which persons should stay for safety. Accordingly, SLS 100 is positioned and programmed to monitor a safety zone 112 that corresponds to minimum safety area 116 at rear area 208 of machine 106. When machine 106 is operating and SLS 100 detects an object 114 (e.g., a person, other equipment, material, etc.) within safety zone 112, SLS 100 causes machine 106 to stop (e.g., to shut down) to prevent an accident caused by object 114.

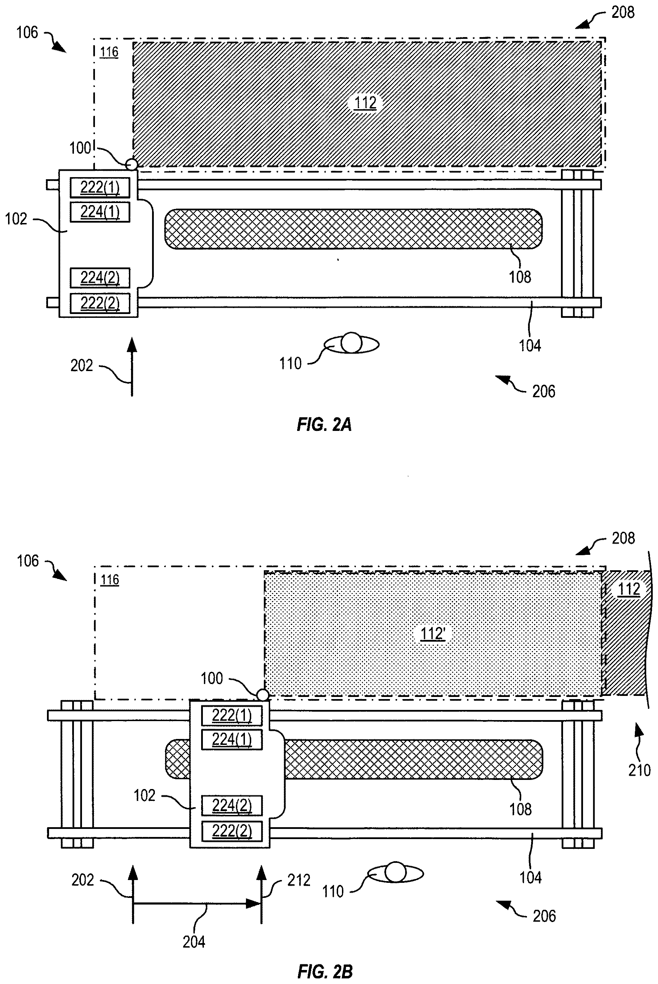

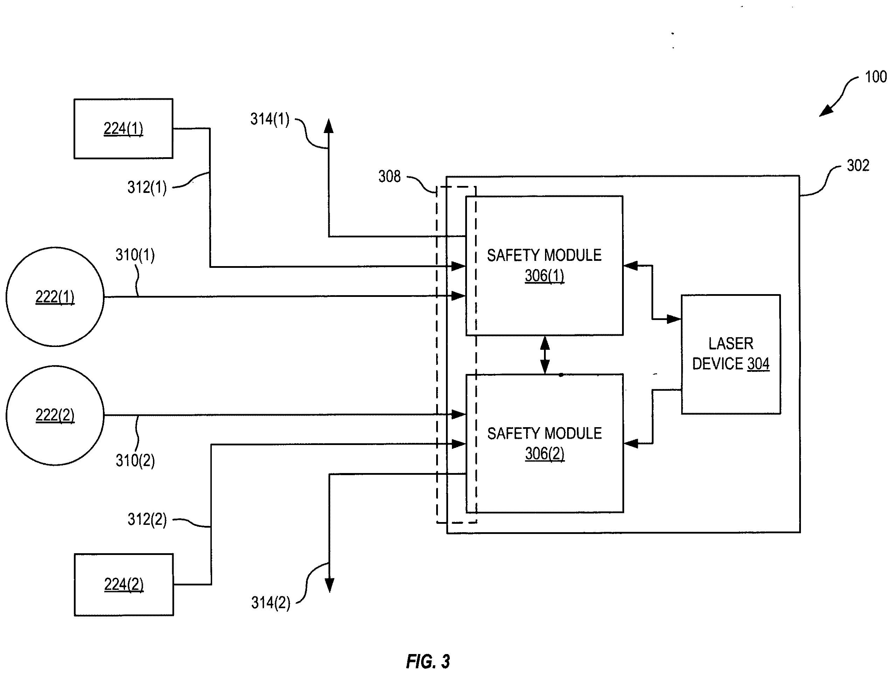

FIG. 2A shows example operation of SLS 100 with platform 102 positioned at a reference position 202 (e.g., a furthest left position that allows loading of workpiece 108) of machine 106, in embodiments. FIG. 2B shows example operation of SLS 100 with platform 102 positioned at a displacement 204 from reference position 202, such as during processing of workpiece 108, in embodiments. FIG. 3 is a schematic illustrating SLS 100 with an enclosure 302, a laser scanner 304, two safety modules 306(1) and 306(2), and a communication interface 308, in embodiments. FIGs. 2A, 2B and 3 are best viewed together with the following description.

To meet safety requirements, platform 102 includes two encoders 222(1) and 222(2), and two reference position sensors 224(1) and 224(2), where encoder 222(2) operates similarly to encoder 222(1) and where reference position sensor 224(2) operates similarly to reference position sensor 224(1). The following description for operation of encoder 222(1) and reference position sensor 224(1) also apply to encoder 222(2) and reference position sensor 224(2), respectively, where safety modules 306 of SLS 100 cooperate to meet the predefined safety standards.

Encoder 222(1) detects (e.g., using a friction wheel, optical encoding, etc.) movement of platform 102 relative to stationary portion 104 and to generate a encoder signal 310(1) indicative of the movement that is input to safety module 306(1) via communication interface 308. In a first example, where platform 102 is mounted on wheels that run along rails of stationary portion 104, a friction wheel of encoder 222(1) touches one wheel of platform 102. Accordingly, based on parameters defining one or more of a diameter of the friction wheel, a ratio of friction wheel revolutions to revolutions of the wheel of platform 102, a diameter of the wheel of platform 102, and a number of pulses generated per revolution of the friction wheel (e.g., one-thousand pulses per revolution), SLS 100 may determine a displacement (see displacement 204 of FIG. 2B) moved by platform 102 relative to stationary portion 104. In another example, the friction wheel touches a surface of the rail of stationary portion 104, whereby SLS 100 determines a displacement moved by platform 102 relative to stationary portion 104 based on parameters defining one or more of a diameter of the friction wheel, and a number of pulses generated per revolution of the friction wheel. In another example, encoder 222(1) reads a marking on stationary portion 104 and generates encoder signal 310(1) to indicate an absolute position of platform 102 on stationary portion 104. Other methods of encoding relative movement and/or absolute position may be used without departing from the scope hereof.

Reference position sensor 224(1) is for example one or more of a microswitch, an optical sensor, a hall-effect switch, and so on, that generates a reference signal 312(1) indicating when platform 102 is at reference position 202. Reference signal 312(1) is input to safety module 306(1) via communication interface 308. As described above, to meet safety standards, SLS 100 has redundant inputs for receiving encoder signal 310(2) from encoder 222(2) and reference signal 312(2) from reference position sensor 224(2), and a redundant output for output signal 314(2).

As shown in FIG. 2A, when platform 102 is positioned at a left-most end (also reference position 202 in this example) of machine 106, safety zone 112 is defined to correspond to minimum safety area 116 from that position. As platform 102 moves from the left-most end to position 212, as shown in FIG. 2B, safety zone 112 also moves and would thereby extends outside of minimum safety area 116, such as into an adjacent area 210 next to machine 106. To prevent machine 106 being undesirably stopped by activity and objects within adjacent area 210, SLS 100 automatically switches zone sets (described in detail below) according to the position of platform 102 and thereby select a different sized safety zone 112' as shown in FIG. 2B. For comparison purposes, FIG. 2B also shows previous sized safety zone 112 of FIG. 2A and resized safety zone 112', however SLS 100 switches from safety zone 112 to safety zone 112', effectively resizing safety zone 112 based on position of platform 102.

To determine displacement 204 of platform 102 from reference position 202, safety module 306(1) processes encoder signal 310(1) and reference signal 312(1) and therefrom automatically selects one of a plurality of zone sets to define a size (and different shape if desired) of safety zone 112.

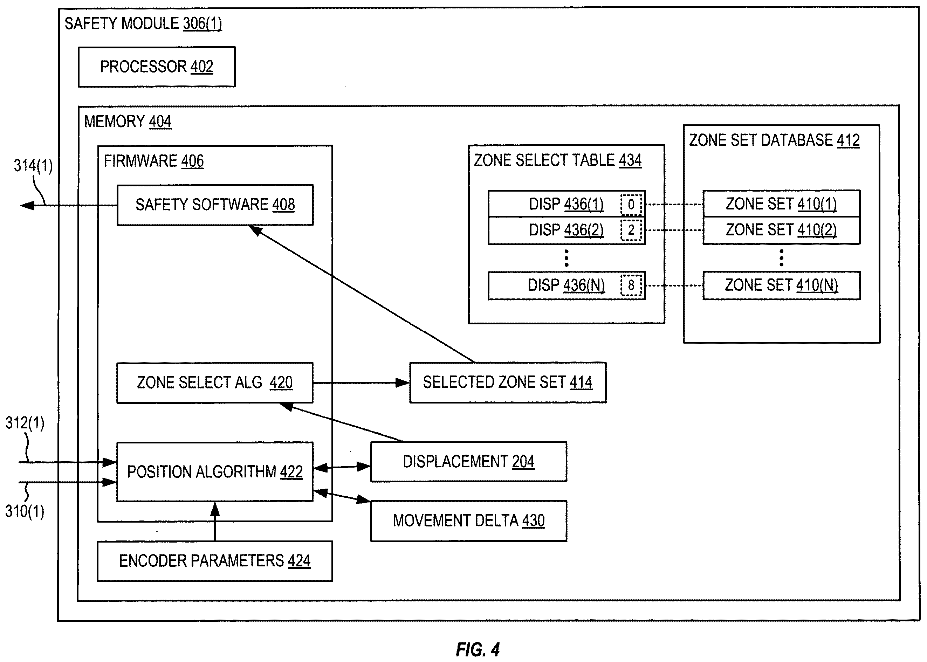

FIG. 4 is a block diagram illustrating safety module 306(1) of FIG. 3 in further example detail, in embodiments. Safety module 306(1) includes at least one digital processor 402 communicatively coupled to memory 404 that stores firmware 406 having machine-executable instruction that when executed by processor 402 causes processor 402 to implement functionality of SLS 100 as described herein.

Firmware 406 is shown with safety software 408 that implements safety-critical functionality and safety conformance of SLS 100. For example, safety software 408 of safety module 306(1) communicates with safety module 306(2) to validate encoder signal 310(1) and reference signal 312(1), and to control operation of laser scanner 304. Safety software 408 also controls laser scanner 304 to detect objects and then determines, based on a distance and angle of that object from laser scanner 304, whether that object is within safety zone 112. When safety software 408 determines that the detected object 114 is within safety zone 112, safety software 408 generates an output signal 314(1) (e.g., output signal switching device (OSSD)) that may be used to stop machine 106.

Memory 404 includes a zone set database 412 storing a plurality of zone sets 410(1)-(N), where each zone set 410 defines one safety zone 112. Each zone set 410(1)-(N) defines a boundary of safety zone 112 relative to a position of laser scanner 304. Each zone set 410(1)-(N) is user definable, for example via a graphical user interface and associated software that allows a user to graphically plot points of a boundary of safety zone 112 relative to a reference point corresponding to a location of laser scanner 304. The graphical user interface and associated software then uploads the defined safety zones 112 to zone set database 412. The number N of zone sets 410 that may be defined is defined by a memory capacity and functionality of SLS 100, but may be as high as seventy in certain embodiments of SLS 100. Memory 404 also includes a zone select table 434 that defines a displacement 436(1)-(N) for each zone set 410(1)-(N), where each displacement 436 corresponds to a determined displacement 204 of platform 102 from reference position 202.

Memory 404 also includes a selected zone set 414 variable that is used by safety software 408 to select one of zone sets 410(1)-(N) for use as safety zone 112. That is, selected zone set 414 is set to a value that selects one of zone sets 410 for use by safety software 408 when it evaluates a range of object 114 detected by laser scanner 304.

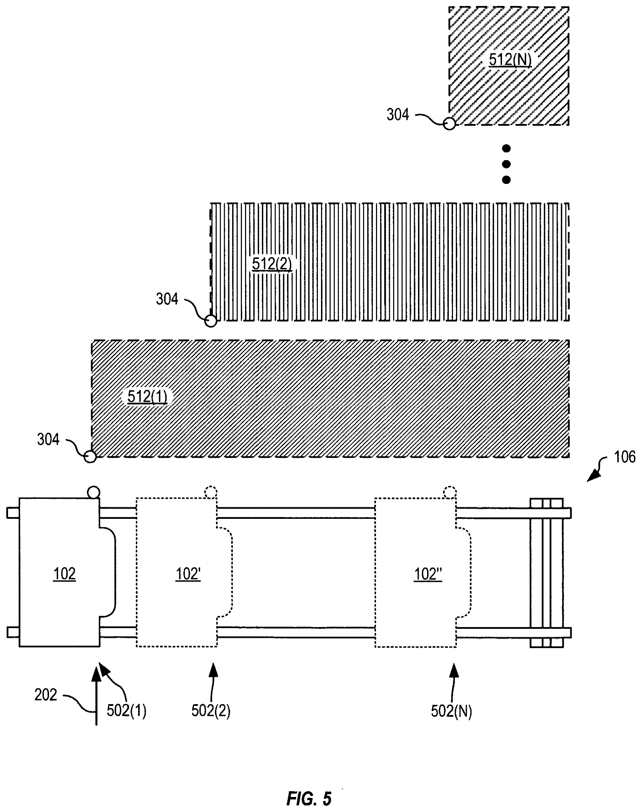

Firmware 406 also includes a zone select algorithm 420 and a position algorithm 422 that cooperate to update selected zone set 414 based on a determined displacement 204 of platform 102 from reference position 202 and zone select table 434. FIG. 5 is a schematic diagram illustrating three example safety zones 512(1), 512(2), and 512(N) defined relative to laser scanner 304 at displacements 502(1), 502(2), and 502(N) of platform 102 from reference position 202. In this example, 502(1) represents a displacement of 0 meters from reference position 202, displacement 502(2) represents a displacement of 2 meters from reference position 202, and displacement 502(N) represents a displacement of 8 meters from reference position 202. Each safety zone 512 is defined within a corresponding zone set 410. For example, safety zone 512(1) is defined within zone set 410(1), safety zone 512(2) is defined within zone set 410(2) and safety zone 512(N) is defined within zone set 410(N).

As defined by zone select table 434, zone set 410(1) and associated safety zone 512(1) are selected when displacement 204 is at 0 meters and less than a next displacement in zone select table 434; zone set 410(2) and associated safety zone 512(2) are selected when displacement 204 is at 2 meters and less than a next displacement in zone select table 434; and zone set 410(N) and associated safety zone 512(N) are selected when displacement 204 is at 8 meters and above. In the example of FIG. 5, safety zone 512(1) corresponds to the position indicated as platform 102 (e.g., at reference position 202), safety zone 512(2) corresponds to the position indicated as platform 102', and safety zone 512(N) corresponds to the position indicated as platform 102". A user may define as many zone sets as needed to provide a desired change in safety zone 512 as platform 102 moves. For example, the user may define more zone sets 410 for finer granularity of change in safety zone 112 as platform 102 moves. Also, switching points (e.g., 0, 2, 8 in the example of FIGs. 4 and 5) need not be linear but may be defined for any position of platform 102 relative to reference position 202 as permitted by stationary portion 104. Also, although meters are used in this example, other measurement scales may be used without departing from the scope hereof. For example, measurements scales may be defined by encoder parameters 424 based on characteristics of reference signal 312(1) relative to movement of platform 102.

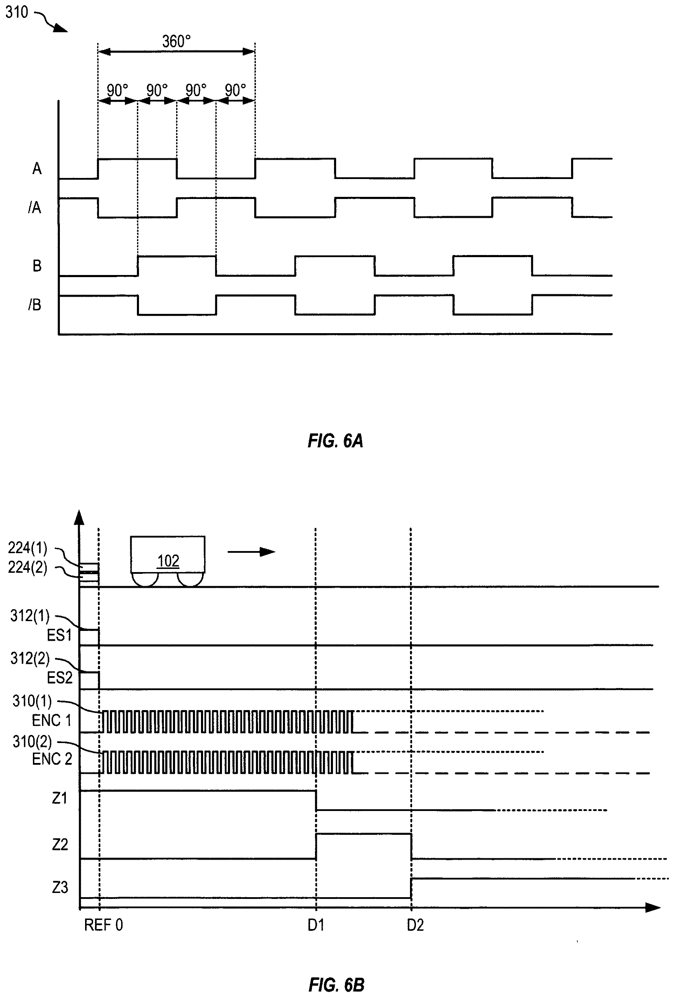

In one operational example, positional algorithm 422 is invoked (e.g., from safety software 408) at intervals (e.g., every twenty-five milliseconds, one-hundred milliseconds, or other value based on a maximum speed of movement of platform 102) to determine a movement delta 430 from encoder signal 310(1) that indicates a change in movement of platform 102. A user defines encoder parameters 424 to characterize encoder signal 310(1) and/or reference signal 312(1), and define a relationship between encoder signal 310(1) and movement of platform 102. In one example, encoder parameters 424 define a number of pulses of encoder signal 310(1) for each centimeter of movement of 102 along stationary portion 104. FIG. 6A is a graph illustrating one example encoder signal 310 that includes both A and B components generated by encoder 222(1), where a phase relationship between the A and B components allows position algorithm 422 and/or corresponding hardware to determine a direction of movement of platform 102 to maintain an accurate pulse count indicative of a displacement of platform 102 from reference position 202. In certain embodiments, movement delta 430 is a hardware register that provides a count of pulses (taking into account the phase/direction of movement) indicative of a movement of platform 102 since a last time movement delta 430 was read, where movement delta 430 is reset each time it is read by position algorithm 422. In other embodiments, displacement 204 is a hardware register providing a count of pulses indicative of an absolute displacement of platform 102 from reference position 202 that is reset to zero when reference signal 312(1) indicates that platform 102 is at reference position 202. For example, each safety module 306 counts pulses from its corresponding encoder 222 to determine a linear distance moved by platform 102 with respect to reference position 202. Safety module 306 implements zone set switching when the derived displacement indicates that platform 102 is positioned at a limit threshold (e.g., one of displacements 436 in zone select table 434) which may be defined to meet safety requirements using a programming user interface of SLS 100.

When invoked, position algorithm 422 reads movement delta 430 and updates a displacement 204 by adding movement delta 430 to displacement 204, taking into account that movement delta 430 may be negative when direction of platform 102 reverses and is therefore effectively subtracted from displacement 204. Displacement 204 is set to zero when reference signal 312(1) indicates that platform 102 is at reference position 202, thereby causing displacement 204 to define movement of platform 102 relative to reference position 202.

Zone select algorithm 420 is invoked at intervals (e.g., one-hundred milliseconds, one second, etc. based on a maximum speed of platform 102) to update selected zone set 414 using displacement 204 and zone select table 434. Accordingly, selected zone set 414 changes as platform 102 moves to different positions along stationary portion 104 and safety zone 112 is selected automatically for use by safety software 408.

FIG. 6B is a graph illustrating example timing of switching of safety zone 112 of SLS 100 of FIGs. 1A and 1B between zone sets 410 (labeled as Z1, Z2, and Z3 in FIG. 6B) based on encoder signals 310(1) and 310(2) and reference signals 312(1) and 312(2) as platform 102 moves away from reference position 202 (labeled as REF 0). To implement consistent safety coverage, at least one safety zone is active during displacement of platform 102, and safety zones may overlap.

As platform 102 moves away from reference position 202, encoders 222(1) and 222(2) (labeled as ENC 1 and ENC 2 in FIG. 6B) generate pulses that are counted and interpreted as movement of platform 102. When platform 102 reaches a first displacement position, D1, Z2 is selected and Z1 is deselected. When platform 102 reaches a second displacement position, D2, Z3 is selected and Z2 is deselected.

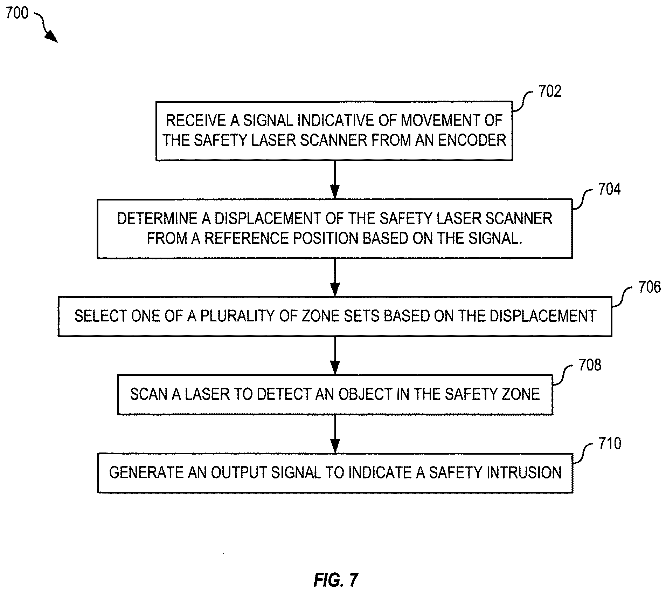

FIG. 7 is a flowchart illustrating one example method 700 for using encoders for zone set switching of a safety laser scanner based on linear measuring detection, in embodiments. Method 700 is implemented in firmware 406 of safety module 306, for example.

In block 702, method 700 receives a signal indicative of movement of the safety laser scanner. In one example of block 702, SLS 100 receives, within communication interface 308, encoder signal 310(1) from encoder 222(1). In block 704, method 700 determines a displacement of the safety laser scanner from a reference position based on the signal. In one example of block 704, position algorithm 422 determines displacement 204 based on movement delta 430 derived from encoder signal 310(1).

In block 706, method 700 selects one of a plurality of zone sets based on the displacement, each zone set defining a safety zone of laser scanner of the safety laser scanner. In one example of block 706, zone select algorithm 420 uses zone select table 434 and displacement 204 to select one of zone sets 410. In block 708, method 700 scans a laser to detect an object in the safety zone. In one example of block 708, laser scanner 304 scans a laser to detect a distance and angle of object 114 in range, and safety software 408 determines that object 114 is within safety zone 112 of one zone set 410 identified by selected zone set 414.

In block 710, method 700 generates an output signal to indicate a safety intrusion. In one example of block 710, safety software 408 generates output signal 314(1) to indicate object 114 detected within safety zone 112.

Blocks 702 through 710 repeat at intervals to automatically update safety zone 112 based on displacement 204 of SLS 100 from reference position 202.

Embodiments of the invention may comprise the following examples:
1. A safety laser scanner with automatic zone set switching based on displacement of the safety laser scanner from a reference position, comprising:
   a laser scanner;
   a communication interface having a first input and an output; and
   a safety module comprising:
      a processor; and
      a memory communicatively coupled with the processor and which stores machine-executable instructions that, when executed by the processor, cause the processor to:
         receive, via the first input, a signal indicative of relative movement of the safety laser scanner;
         determine a displacement of the safety laser scanner from the reference position based on the signal; and
         select one of a plurality of zone sets based on the displacement for use by the laser scanner, each of the zone sets defines a respective safety zone of the laser scanner.
2. The safety laser scanner of example 1, the memory further stores machine-executable instructions that, when executed by the processor, cause the processor to:
   detect, by the laser scanner, an object in the safety zone; and
   generate an output signal via the output to indicate a safety intrusion.
3. The safety laser scanner of example 1, the signal being generated by an encoder that detects movement of the safety laser scanner relative to the reference position.
4. The safety laser scanner of example 3, wherein the safety laser scanner is mounted to a platform of a machine that moves relative to a stationary portion of the machine, and the encoder detects movement of the platform relative to the stationary portion.
5. The safety laser scanner of example 4, each of the zone sets defines the respective safety zone relative to the machine and corresponds to a defined displacement from the reference position.
6. The safety laser scanner of example 1, the communication interface comprising a second input to receive a second signal from a reference position sensor, the second signal indicating when the safety laser scanner is positioned at the reference position.
7. The safety laser scanner of example 6, the communication interface further comprising:
   a third input to receive a third signal from a second encoder that indicates movement of the safety laser scanner relative to the reference position; and
   a fourth input to receive a fourth signal from a second sensor that indicates when the safety laser scanner is positioned at the reference position;
   wherein the third and fourth inputs provide redundancy for purposes of safety.
8. The safety laser scanner of example 6, wherein the safety laser scanner is mounted to a platform of a machine that moves relative to a stationary portion of the machine, and the reference position sensor detects when the platform is at the reference position relative to the stationary portion.
9. The safety laser scanner of example 8, the reference position being a reference position of the platform relative to the stationary portion.
10. The safety laser scanner of example 1, the memory further stores machine-executable instructions that, when executed by the processor, cause the processor to:
   determine a direction of movement based on a phase of the signal;
   determine a distance moved based on a pulse count of the signal; and
   determine the displacement of the safety laser scanner from the reference position by (a) adding the distance moved to the displacement when the direction is away from the reference position and (b) subtracting the distance moved from the displacement when the direction is towards the reference position.
11. The safety laser scanner of example 1, further comprising a second safety module comprising:
   a second processor; and
   a second memory communicatively coupled with the second processor and which stores machine-executable instructions that, when executed by the processor, cause the processor to:
      receive, via the input, a second signal indicative of relative movement of the safety laser scanner sensed by a second encoder;
      determine a second displacement of the safety laser scanner from the reference position based on the second signal; and
      select one of the plurality of zone sets based on the second displacement;
      wherein the safety module and the second safety module cooperate to meet predefined safety standards.
12. A method for zone set switching of a safety laser scanner based on linear measuring detection, comprising:
   receiving, within a communication interface of the safety laser scanner, a signal indicative of movement of the safety laser;
   determining a displacement of the safety laser scanner from a reference position based on the signal; and
   selecting one of a plurality of zone sets based on the displacement, where each zone set defines a respective safety zone of laser scanner of the safety laser scanner.
13. The method of example 12, further comprising:
   scanning a laser to detect an object in the safety zone; and
   generating an output signal via the output to indicate a safety intrusion.
14. The method of example 12, wherein the safety laser scanner is mounted to a platform of a machine that moves relative to a stationary portion of the machine, and the signal is generated by an encoder detecting movement of the platform relative to the stationary portion.
15. The method of example 12, further comprising:
   receiving a second signal indicative of the safety laser scanner positioned at the reference position from a reference position sensor; and
   setting the displacement to zero in response to the second signal.
16. The method of example 15, wherein the safety laser scanner is mounted to a platform of a machine that moves relative to a stationary portion of the machine, and the reference position sensor detects when the platform is at the reference position relative to the stationary portion.
17. The method of example 12, the determining the displacement further comprising:
   determining a direction of movement based on a phase of the signal;
   determining a relative distance moved based on a pulse count of the signal;
   adding the relative distance moved to a previous displacement of the safety laser scanner to determine the displacement when the direction is away from the reference position; and
   subtracting the relative distance moved from the previous position to determine the displacement when the direction is towards the reference position.
18. The method of example 12, the receiving, the determining, and the setting being implemented in a first safety module of the safety laser scanner, the method further comprising implementing the receiving, the determining, and the setting in a second safety module of the safety laser scanner, and cooperating between the first safety module and the second safety module to meet predefined safety standards.

Changes may be made in the above methods and systems without departing from the scope hereof. It should thus be noted that the matter contained in the above description or shown in the accompanying drawings should be interpreted as illustrative and not in a limiting sense. The following claims are intended to cover all generic and specific features described herein, as well as all statements of the scope of the present method and system, which, as a matter of language, might be said to fall therebetween.

## Claims

1. A safety laser scanner with automatic zone set switching based on displacement of the safety laser scanner from a reference position, comprising:
a laser scanner;
a communication interface having a first input and an output; and
a safety module comprising:
a processor; and
a memory communicatively coupled with the processor and which stores machine-executable instructions that, when executed by the processor, cause the processor to:
receive, via the first input, a signal indicative of relative movement of the safety laser scanner;
determine a displacement of the safety laser scanner from the reference position based on the signal; and
select one of a plurality of zone sets based on the displacement for use by the laser scanner, each of the zone sets defines a respective safety zone of the laser scanner.

2. The safety laser scanner of claim 1, the memory further stores machine-executable instructions that, when executed by the processor, cause the processor to:
detect, by the laser scanner, an object in the safety zone; and
generate an output signal via the output to indicate a safety intrusion.

3. The safety laser scanner of claim 1 or 2, the signal indicative of relative movement of the safety laser scanner being generated by an encoder that detects movement of the safety laser scanner relative to the reference position.

4. The safety laser scanner of claim 3, wherein the safety laser scanner is mounted to a platform of a machine that moves relative to a stationary portion of the machine, and the encoder detects movement of the platform relative to the stationary portion, especially wherein each of the zone sets defines the respective safety zone relative to the machine and corresponds to a defined displacement from the reference position.

5. The safety laser scanner of one of claims 1 to 4, the communication interface comprising a second input to receive a second signal from a reference position sensor, the second signal indicating when the safety laser scanner is positioned at the reference position.

6. The safety laser scanner of claim 5, the communication interface further comprising:
a third input to receive a third signal from a second encoder that indicates movement of the safety laser scanner relative to the reference position; and
a fourth input to receive a fourth signal from a second sensor that indicates when the safety laser scanner is positioned at the reference position;
wherein the third and fourth inputs provide redundancy for purposes of safety.

7. The safety laser scanner of claim 5, wherein the safety laser scanner is mounted to a platform of a machine that moves relative to a stationary portion of the machine, and the reference position sensor detects when the platform is at the reference position relative to the stationary portion, especially wherein the reference position is a reference position of the platform relative to the stationary portion.

8. The safety laser scanner of one of claims 1 to 7, the memory further stores machine-executable instructions that, when executed by the processor, cause the processor to:
determine a direction of movement based on a phase of the signal;
determine a distance moved based on a pulse count of the signal; and
determine the displacement of the safety laser scanner from the reference position by (a) adding the distance moved to the displacement when the direction is away from the reference position and (b) subtracting the distance moved from the displacement when the direction is towards the reference position.

9. The safety laser scanner of one of claims 1 to 8, further comprising a second safety module comprising:
a second processor; and
a second memory communicatively coupled with the second processor and which stores machine-executable instructions that, when executed by the processor, cause the processor to:
receive, via the input, a second signal indicative of relative movement of the safety laser scanner sensed by a second encoder;
~ determine a second displacement of the safety laser scanner from the reference position based on the second signal; and
select one of the plurality of zone sets based on the second displacement;
wherein the safety module and the second safety module cooperate to meet predefined safety standards.

10. A method for zone set switching of a safety laser scanner based on linear measuring detection, comprising:
receiving, within a communication interface of the safety laser scanner, a signal indicative of movement of the safety laser;
determining a displacement of the safety laser scanner from a reference position based on the signal; and
selecting one of a plurality of zone sets based on the displacement, where each zone set defines a respective safety zone of laser scanner of the safety laser scanner.

11. The method of claim 10, further comprising:
scanning a laser to detect an object in the safety zone; and
generating an output signal via the output to indicate a safety intrusion.

12. The method of claim 10 or 11, wherein the safety laser scanner is mounted to a platform of a machine that moves relative to a stationary portion of the machine, and the signal is generated by an encoder detecting movement of the platform relative to the stationary portion.

13. The method of one of claims 10 to 12, further comprising:
receiving a second signal indicative of the safety laser scanner positioned at the reference position from a reference position sensor; and
setting the displacement to zero in response to the second signal,
especially wherein the safety laser scanner is mounted to a platform of a machine that moves relative to a stationary portion of the machine, and the reference position sensor detects when the platform is at the reference position relative to the stationary portion.

14. The method of one of claims 10 to13, the determining the displacement further comprising:
determining a direction of movement based on a phase of the signal;
determining a relative distance moved based on a pulse count of the signal;
adding the relative distance moved to a previous displacement of the safety laser scanner to determine the displacement when the direction is away from the reference position; and
subtracting the relative distance moved from the previous position to determine the displacement when the direction is towards the reference position.

15. The method of one of claims 10 to 14, the receiving, the determining, and the setting being implemented in a first safety module of the safety laser scanner, the method further comprising implementing the receiving, the determining, and the setting in a second safety module of the safety laser scanner, and cooperating between the first safety module and the second safety module to meet predefined safety standards.
